**Europäisches Patentamt**

**European Patent Office**

**Office européen des brevets**

(11) Veröffentlichungsnummer : **0 474 032 B1**

(12) # EUROPÄISCHE PATENTSCHRIFT

(45) Veröffentlichungstag der Patentschrift :
**05.04.95 Patentblatt 95/14**

(51) Int. Cl.$^6$ : **H02M 7/527, H02M 7/5395**

(21) Anmeldenummer : **91114003.6**

(22) Anmeldetag : **21.08.91**

(54) **Verfahren und Vorrichtung zur Erzeugung eines synchronen Pulsmusters mit gebrochenen Pulszahlen.**

(30) Priorität : **04.09.90 DE 4028016**

(43) Veröffentlichungstag der Anmeldung :
**11.03.92 Patentblatt 92/11**

(45) Bekanntmachung des Hinweises auf die
Patenterteilung :
**05.04.95 Patentblatt 95/14**

(84) Benannte Vertragsstaaten :
**AT CH DE FR GB IT LI SE**

(56) Entgegenhaltungen :
**EP-A- 0 293 844**
**DE-A- 3 420 436**
**DE-A- 3 738 694**

(73) Patentinhaber : **SIEMENS
AKTIENGESELLSCHAFT
Wittelsbacherplatz 2
D-80333 München (DE)**

(72) Erfinder : **Heinle, Georg, Dipl.-Ing.
Moorbachweg 14
W-8520 Erlangen (DE)**

**Beschreibung**

Die Erfindung bezieht sich auf ein Verfahren und Vorrichtung zur Erzeugung eines synchronen Pulsmusters mit gebrochenen Pulszahlen zur Steuerung eines Wechselrichters eines Zwischenkreisumrichters.

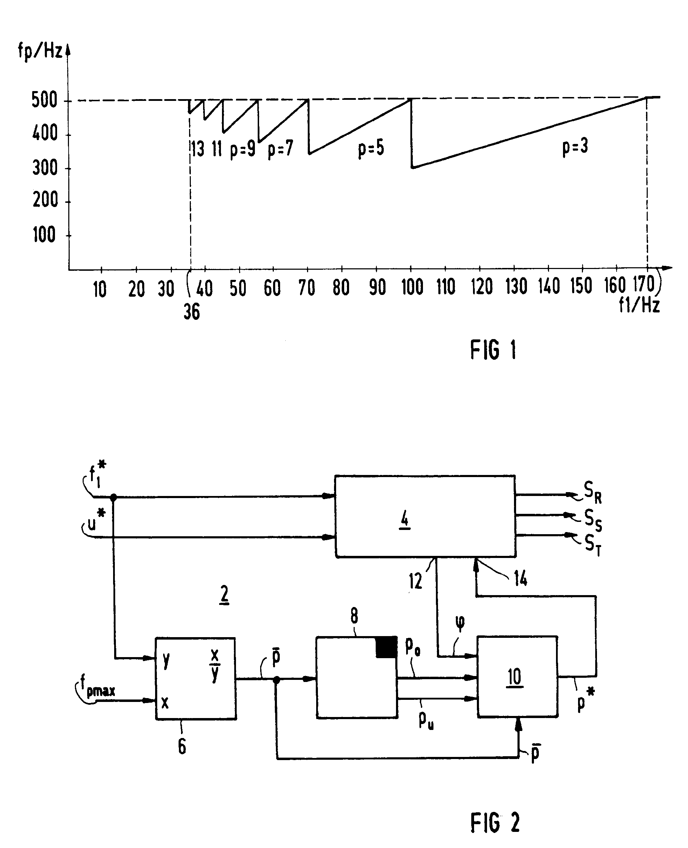

Im Pulsbetrieb von Zwischenkreisumrichtern (Strom- bzw. Spannungszwischenkreis) unterscheidet man zwischen den asynchronen und synchronen Pulsbetrieb. In Figur 1 ist eine bekannte Steuerkennlinie in einem Diagramm über der Grundfrequenz ($f_1$) dargestellt. Im Bereich 0 Hz < $f_1$ < 36 Hz liegt der asynchrone Pulsbetrieb und im Bereich 36 Hz < $f_1$ < 170 Hz liegt der synchrone Pulsbetrieb vor. Der asynchrone Pulsbetrieb bietet die Möglichkeit, den Wechselrichter des Zwischenkreisumrichters bei jeder Grundfrequenz $f_1$ mit der maximal zulässigen Pulsfrequenz $f_{pmax}$ zu betreiben. Diese Betriebsart hat aber zwei wesentliche Nachteile. Erstens treten Schwebungserscheinungen zwischen der Pulsfrequenz $f_p$ und der Grundfrequenz $f_1$ auf und zweitens sind optimierte Pulsmuster asynchron nicht realisierbar.

Der synchrone Pulsbetrieb verursacht keine Schwebungen und ermöglicht die Verwendung optimaler Pulsmuster. Ein wesentlicher Nachteil besteht darin, daß man die maximal zulässige Pulsfrequenz $f_{pmax}$ nicht ausnutzen kann. Die Pulszahl p gibt das Verhältnis zwischen der Pulsfrequenz $f_p$ und der Grundfrequenz $f_1$ an und genügt den Bedingungen gemäß Figur 1.

Der Erfindung liegt nunmehr die Aufgabe zugrunde, ein Verfahren und eine Vorrichtung anzugeben, wodurch die Nutzung der maximal zulässigen Pulsfrequenz $f_{pmax}$ auch im synchronen Pulsbetrieb möglich ist.

Diese Aufgabe wird erfindungsgemäß mit den Merkmalen des Anspruchs 1 gelöst.

Bei diesem erfindungsgemäßen verfahren wird die aus maximal zulässiger Pulsfrequenz und Grundfrequenz ermittelte gebrochene Pulszahl dadurch realisiert, daß innerhalb einer einstellbaren Zyklusdauer zwischen zwei benachbarten Pulsmustern mit einer zur ermittelten nächstniederen und nächsthöheren Pulszahl hin- und hergeschaltet wird. Als Mittelung erhält man dann diese ermittelte gebrochene Pulszahl. Dies ist erlaubt, da die maximale Pulsfrequenz des Wechselrichters, die nur aus thermischen Gründen beschränkt ist, kurzzeitig überschritten werden darf. Die Zyklusdauer wird bestimmt durch seine Intervallzahl, wobei diese Intervallzahl aus dem zehnfachen der Differenz der nächsthöheren und nächstniederen Pulszahl bestimmt wird. Aus dieser Intervallzahl läßt sich die Anzahl der Intervalle mit der nächstniederen Pulszahl und der nächsthöheren Pulszahl mit Hilfe der ermittelten gebrochenen Pulszahl, der nächstniederen und der nächsthöheren Pulszahl ermitteln, d.h., in Abhängigkeit der gebrochenen Pulszahl setzt sich die Intervallzahl der Zyklusdauer aus der Anzahl der Intervalle der nächstniederen und der nächsthöheren Pulszahl zusammen. Mit diesem Verfahren läßt sich jedes synchrone Pulsmuster mit einer beliebigen gebrochenen Pulszahl erzeugen, wodurch auch im synchronen Pulsbetrieb die Nutzung der maximalen Pulsfrequenz ermöglicht wird.

Bei einem vorteilhaften verfahren werden die Intervalle mit gleichen Pulszahlen während der Zyklusdauer gebündelt. Dadurch wird erreicht, daß möglichst wenig Umschaltungen zwischen den Pulsmustern mit nächstniederer und mit nächsthöherer Pulszahl stattfinden.

Bei einem weiteren vorteilhaften verfahren werden die Intervalle mit der nächstniederen und der nächsthöheren Pulzahl während der Zyklusdauer abgewechselt, so daß die Periodendauer der Mittelung möglichst klein ist.

Der Aufbau einer erfindungsgemäßen Vorrichtung zur Durchführung des Verfahrens ist dem Anspruch 5 zu entnehmen, wobei von einem bekannten Steuersatz ausgegangen wird. Vorteilhafte Ausgestaltung der Einrichtung zur Ermittlung des geschalteten Sollwertes der Pulszahl (Teil der Vorrichtung) sind den Unteransprüchen 6 und 7 zu entnehmen. Eine besonders vorteilhafte Ausführungsform der Vorrichtung zur Durchführung des Verfahrens ist dem Unteranspruch 8 zu entnehmen.

Zur weiteren Erläuterung wird auf die Zeichnung Bezug genommen, in der ein Ausführungsbeispiel einer Vorrichtung zur Durchführung des erfindungsgemäßen Verfahrens schematisch veranschaulicht ist.

Figur 2      zeigt ein Blockschaltbild der erfindungsgemäßen Vorrichtung, in

Figur 3      ist ein Blockschaltbild einer Einrichtung zur Ermittlung des geschalteten Sollwertes der Pulszahl nach Figur 2 näher dargestellt, die

Figur 4      veranschaulicht ein Pulsmuster mit der Pulszahl p = 3 in einem Diagramm über dem Phasenwinkel $\varphi$,

Figur 5      zeigt ein Pulsmuster mit der Pulszahl p = 5 in einem Diagramm über dem Phasenwinkel $\varphi$ und in

Figur 6      ist ein erzeugtes Pulsmuster mit der gebrochenen Pulszahl p = 4 in einem Diagramm über dem Phasenwinkel $\varphi$ dargestellt.

Die Figur 2 zeigt das Blockschaltbild einer Vorrichtung 2 zur Durchführung des erfindungsgemäßen Verfahrens. Diese Vorrichtung 2 enthält einen bekannten Steuersatz 4, dem ein GrundfrequenzSollwert $f_1^*$ und ein Spannungs-Sollwert u* zugeführt ist. Diese Sollwerte $f_1^*$ und u* können von einer überlagerten Regeleinrichtung, die aus Übersichtlichkeitsgründen nicht dargestellt ist, bereitgestellt werden. Dieser bekannte Steuersatz 4 stellt an seinen Ausgängen Steuersignale $S_R, S_S, S_T$ für einen Wechselrichter, der ebenfalls aus Übersichtlichkeitsgründen nicht näher dargestellt ist, bereit. Der Wechselrichter kann zu einem Zwischenkreisumrichter gehören, der einen Strom- bzw. Spannungszwischenkreis aufweist. Verschiedene Ausführungsformen von Steuersätzen sind in der Dissertation von Georg Stanke, 1987, insbesondere im Kapitel 4.4, näher dargestellt.

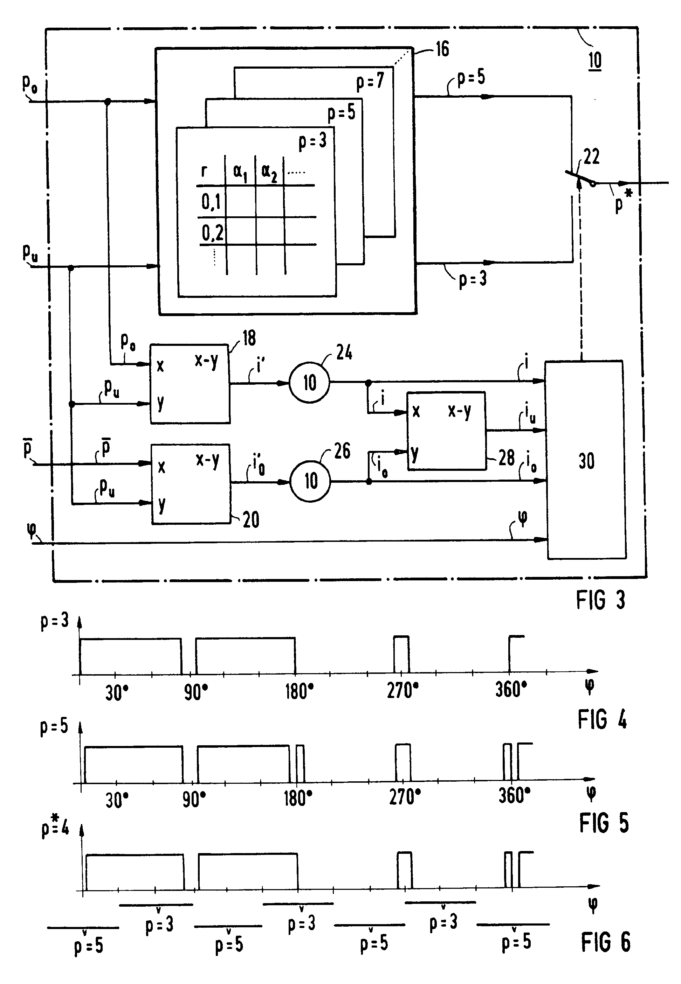

Außerdem enthält diese Vorrichtung 2 noch einen Quotientenbildner 6, dem ein Speicher 8 nachgeschaltet ist. Dieser Speicher 8 ist ausgangsseitig mit einer Einrichtung 10 zur Ermittlung des geschalteten Sollwertes der Pulszahl p*, beispielsweise die Pulszahlen p = 3 und p = 5, verknüpft. Ein Blockschaltbild dieser Einrichtung 10 ist in der Figur 3 näher dargestellt. Am x-Eingang des Quotientenbilderns 6 steht die maximal zulässige Pulszahl $f_{pmax}$ an, die gemäß Figur 1 gleich 500 Hz ist. Am y-Eingang dieses Quotientenbildners 6 steht ein Grundfrequenz-Sollwert $f_1^*$ an, der zwischen 0 Hz und 170 Hz gemäß Figur 1 variiert werden kann. Ausgangsseitig steht am Quotientenbildner 6 eine ermittelte gebrochene Pulszahl $\bar{p}$ an. Diese Pulszahl $\bar{p}$ wird dem nachfolgenden Speicher 8 zugeführt, wodurch an seinen Ausgängen zur gebrochenen Pulszahl $\bar{p}$ eine nächstniedere und eine nächsthöhere Pulszahl $p_u$ und $p_o$ erscheint, d.h., im Speicher 8 ist eine Tabelle hinterlegt, deren Adressen jede beliebige gebrochene Pulszahl $\bar{p}$ ist. Abgespeichert sind Pulszahlen p = 3, p = 5, p = 7, ..., die jeweils zur Adresse (gebrochene Pulszahl $\bar{p}$) nächstnieder und nächsthöher sind. Diese aufgerufenen Pulszahlen $p_u$ und $p_o$ und die ermittelte gebrochene Pulszahl $\bar{p}$ sind der Einrichtung 10 zugeführt. Außerdem wird von dem bekannten Steuersatz 4 ein Phasensignal $\varphi$ generiert, das über einen Phasenwinkelausgang 12 und einer nicht näher bezeichneten Leitung der Einrichtung 10 zugeführt wird. Ausgangsseitig ist die Einrichtung 10 mit einem Pulszahl-Eingang 14 des Steuersatzes 4 verknüpft.

Die Figur 3 zeigt ein Blockschaltbild einer Ausführungsform der Einrichtung 10 zur Ermittlung des geschalteten Sollwertes der Pulszahl p*. Eingangsseitig weist diese Einrichtung 10 einen Speicher 16 und zwei Differenzbildner 18 und 20 und ausgangsseitig einen Umschalter 22 auf. Den Differenzbildnern 18 und 20 ist jeweils eine Konstante 24 und 26 nachgeschaltet. Jede Konstante 24 bzw. 26 weist einen Faktorwert von Zehn auf. Diesen Konstanten 24 und 26 ist einerseits ein weiterer Differenzbildner 28 und andererseits ein programmierbarer Zähler 30 nachgeschaltet. Ausgangsseitig ist dieser Zähler 30 mit einem Betätigungseingang des Umschalters 22 verbunden. Dem programmierbaren Zähler 30 ist außerdem das Phasensignal $\varphi$ des Steuersatzes 4 zugeführt. Der Ausgang der Konstanten 24 ist mit dem x-Eingang und der Ausgang der Konstanten 26 ist mit dem y-Eingang des weiteren Differenzbildners 28 verknüpft.

Die eingangsseitigen Pulszahl $p_u$ und $p_o$ sind einerseits dem Speicher 16 und andererseits dem Differenzbilder 18 zugeführt, wobei am x-Eingang dieses Differenzbilderns 18 die nächsthöhere Pulszahl $p_o$ und am y-Eingang die nächstniedere Pulszahl $p_u$ anstehen. Am x-Eingang des Differenzbildners 20 steht die ermittelte gebrochene Pulszahl $\bar{p}$ und an seinem y-Eingang die nächstniedere Pulszahl $p_u$ an.

Im Speicher 16 sind mehrere Tabellen hinterlegt, wobei in jeder Tabelle die Winkel in Abhängigkeit des Aussteuergrads r jeweils eines Pulsmusters abgelegt sind. Dies wird dadurch verdeutlicht, daß die Tabellen für die Pulsmuster mit der Pulszahl p = 3, p = 5 und p = 7 im Speicher schematisch dargestellt sind.

In der Figur 4 ist das Pulsmuster mit der Pulszahl p = 3 in einem Diagramm über den Phasenwinkel $\varphi$ näher dargestellt. Figur 5 ist das Pulsmuster mit der Pulszahl p = 5 in einem Diagramm über den Phasenwinkel $\varphi$ näher dargestellt.

Bei einer vorteilhaften Ausführung der Vorrichtung 2 zur Durchführung des erfindungsgemäßen Verfahrens ist als Einrichtung 10 zur Ermittlung des geschalteten Sollwertes der Pulszahl p* ein Mikroprozessor vorgesehen. Diesem Mikroprozessor ist ein Rechenprogramm eingespeichert mit dem folgende Gleichungen

$$i = (p_o - p_u) \cdot 10 \quad (1)$$

$$i_o = (\bar{p} - p_u) \cdot 10 \quad (2)$$

$$i_u = i - i_o \quad (3)$$

abgearbeitet werden können, wenn die gebrochene Pulszahl $\bar{p}$ bereitsteht. Mit der gebrochenen Pulszahl $\bar{p}$ ist die nächsthöhere Pulszahl $p_o$ und die nächstniedere Pulszahl $p_u$ festgelegt. Diese Pulszahlen $\bar{p}, p_o$ und $p_u$ in die Gleichungen (1) und (2) eingesetzt, ergeben die Intervallzahl i der Zyklusdauer dz und die Intervallzahl $i_o$ mit der nächsthöheren Pulszahl $p_o$. Diese ermittelten Werte in der Gleichung (3) eingesetzt ergibt die Intervallzahl $i_u$ mit der nächstniederen Pulszahl $p_u$.

Die in den Gleichungen (1) bis (3) formulierte Gesetzmäßigkeit läßt sich noch allgemeiner formulieren. Will man eine Pulszahl $\bar{p}$, die k Stellen zur Basis B hinter dem Komma besitzt, realisieren, so ist dies folgendermaßen möglich:

$$i = (p_o - p_u) \cdot B^k \quad (4)$$

3

EP 0 474 032 B1

$$i_o = (\bar{p} - p_u) \cdot B^k \quad (5)$$

$$i_u = i - i_o (6) \quad (6)$$

Eine Zahlenbasis B für eine prozessormäßige Realisierung ist B = 2.

Anhand eines Ausführungsbeispiels soll das erfindungsgemäße Verfahren näher erläutert werden:

Dabei wird vorausgesetzt, daß der Grundfrequenz-Sollwert $f_1^*$ 119 Hz und die maximal zulässige Pulsfrequenz $p_{fmax}$ 500 Hz beträgt. Außerdem ist jedes Intervall i der Zyklusdauer dz 60 °el lang.

Mit diesen Werten ermittelt der Quotientenbildner 6 als gebrochene Pulszahl $\bar{p}$ den Wert 4,2. Mittels dieser gebrochenen Pulszahl $\bar{p}$ = 4,2 erscheint an den beiden Ausgängen des dem Quotientenbildners 6 nachgeschalteten Speichers 8 die nächsthöhere Pulszahl $p_o$ = 5 und die nächstniedere Pulszahl $p_u$ = 3. Die Einrichtung 10 bestimmt mittels der Differenzbilder 18 und 20 und der beiden Konstanten 24 und 26 eine Intervallzahl i = 20 pro Zyklusdauer dz und die Anzahl der Intervalle $i_o$ = 12 mit der nächsthöheren Pulszahl $p_o$ = 5. Mittels des weiteren Differenzbildners 28 wird als Anzahl der Intervalle $i_u$ die Zahl 8 ermittelt. Diese Anzahlen der Intervalle $i, i_o$ und $i_u$ werden zusammen mit dem Phasensignal $\varphi$, das die Funktion eines Clocksignals hat, dem programmierbaren Zähler 30 zugeführt. Dadurch wird beim Zähler 30 drei Zählerstände gesetzt, die mittels des Phasensignals $\varphi$ auf Zählerstand Null gezählt werden. Der Zähler 30 überprüft, ob die Intervallzahl i der Zyklusdauer dz gleich der Summe der Anzahl der Intervalle $i_u$ mit der nächstniederen Pulszahl $p_u$ = 3 und der Anzahl der Intervalle $i_o$ mit der nächsthöheren Pulszahl $p_o$ = 5 ist. Die Zyklusdauer dz beträgt bei diesem Rechenbeispiel 20 . 60 °el = 1.200 °el, das entspricht 3 1/3 Grundschwingungsperioden.

Mittels der nächstniederen Pulszahl $p_u$ und der nächsthöheren Pulszahl $p_o$ werden aus dem Speicher 16 die Pulsmuster mit der Pulszahl p = 3 und p = 5 parallel ausgelesen. Diese parallelen Pulsmuster werden mittels des Umschalters 22 seriell als geschalteter Sollwert der Pulszahl p* aus der Einrichtung 10 gelesen, wobei der Wechsel zwischen den beiden Kanälen entweder alle 60° el (eine Intervallänge der Zyklusdauer dz) oder nach einem vielfachen von 60° el stattfindet. Ein seriell ausgelesene Pulsmuster p* ist in Figur 6 in einem Diagramm über den Phasenwinkel $\varphi$ näher dargestellt. Dieses Pulsmuster p* wird im Steuersatz 4 in Steuersignale $S_R, S_S, S_T$ gewandelt.

Das in Figur 6 dargestellte Pulsmuster p* mit der Pulszahl $\bar{p}$ = 4 besteht aus 60° el-Abschnitten des Pulsmusters mit der Pulszahl p = 3 (Figur 4) und aus 60° el-Abschnitten des Pulsmusters mit der Pulszahl p = 5 (Figur 5). Zum besseren Verständnis ist dies durch waagrechte Striche mit den Bezeichnungen p = 3 und p = 5 dargestellt, d.h. der Umschalter 22 der Einrichtung 16 schaltet alle 60 °el um. Dadurch wird erreicht, daß die Periodendauer der Mittelung sehr klein ist.

Werden die Intervalle $i_o$ bzw. $i_u$ mit gleichen Pulszahlen $p_o$ bzw. $p_u$ gebündelt, so wird die Anzahl der Umschaltungen vermindert. Die Umschaltung zwischen den Pulszahlen soll so erfolgen, daß dabei keine störenden Einschwingvorgänge im Strom auftreten. Besonders vorteilhaft als Umschaltpunkte sind die Extrema der Grundschwingungsspannung.

Das Pulsmuster p* gemäß Figur 6 entspricht betrachtet über die Zyklusdauer dz einem Pulsmuster mit einer gebrochenen Pulszahl $\bar{p}$ = 4. Dadurch wird erreicht, daß im synchronen Pulsbetrieb die maximal zulässige Pulsfrequenz $f_{pmax}$ genutzt werden kann, wodurch die Modulationsverluste im Motor sinken.

Somit kann man durch geeignete Auswahl von zwei benachbarten Pulsmustern $p_u$ und $p_o$ und einer geeigneten Auswahl von Intervallen $i_o$ und $i_u$ jede beliebige gebrochene Pulszahl $\bar{p}$ realisieren, wobei das erzeugte Pulsmuster p* aus einem nächstniederen und einem nächsthöheren Pulsmuster zusammengesetzt ist.

**Patentansprüche**

1. Verfahren zur Erzeugung eines synchronen Pulsmusters mit gebrochenen Pulszahlen ($\bar{p}$) zur Steuerung eines Wechselrichters eines Zwischenkreisumrichters, bestehend aus folgenden Verfahrensschritten:

   a) Ermittlung einer gebrochenen Pulszahl ($\bar{p}$) aus der maximal zulässigen Pulsfrequenz ($f_{pmax}$) des Zwischenkreisumrichters und eines Grundfrequenz-Sollwertes ($f_1^*$),

   b) Auswahl einer nächstniederen und einer nächsthöheren ganzzahligen Pulszahl ($p_u, p_o$) zur ermittelten gebrochenen Pulszahl ($\bar{p}$),

   c) Bereitstellung von zwei Pulsmustern mit den ausgewählten ganzzahligen Pulszahlen ($p_u, p_o$) aus abgespeicherten Pulsmustern,

   d) Ermittlung einer Intervallzahl (i) pro vorbestimmter Zyklusdauer (dz) in Abhängigkeit einer Differenz der ausgewählten nächstniederen und nächsthöheren Pulszahl ($p_u, p_o$) und einer Konstanten,

   e) Bestimmung der Anzahl der Intervalle ($i_o$) mit der nächsthöheren Pulszahl ($p_o$) in Abhängigkeit einer

4

Differenz der gebrochenen Pulszahl ($\bar{p}$) und der ausgewählten nächstniederen Pulszahl ($p_u$) und einer Konstanten,

f) Bestimmung der Anzahl der Intervalle ($i_u$) mit der nächstniederen Pulszahl ($p_u$) in Abhängigkeit einer Differenz der ermittelten Intervallzahl ($i$) und der ermittelten Anzahl der Intervalle ($i_o$) mit der nächsthöheren Pulszahl ($p_o$),

g) Kombination der Intervalle ($i_u$) der nächstniederen Pulszahl ($p_u$) mit den Intervallen ($i_o$) der nächsthöheren Pulszahl ($p_o$) innerhalb der Zyklusdauer (dz), während der die bereitgestellten Pulsmuster ausgelesen werden.

2. Verfahren nach Anspruch 1, wobei die Intervallzahl ($i$) der Zyklusdauer (dz), die Intervallzahl ($i_o$) mit der nächsthöheren Pulszahl ($p_o$) und die Intervallzahl ($i_u$) mit der nächstniederen Pulszahl ($p_u$) mit den folgenden Gleichungen

$$i = (p_o - p_u) \cdot k$$
$$i_o = (\bar{p} - p_u) \cdot k$$
$$i_u = i - i_o$$

berechnet werden.

3. Verfahren nach Anspruch 1, wobei die Intervalle ($i_u$ bzw. $i_o$) mit gleichen Pulszahlen ($p_u$ bzw. $p_o$) gebündelt werden.

4. Verfahren nach Anspruch 1, wobei die Intervalle ($i_u$) mit der nächstniederen Pulszahl ($p_u$) und die Intervalle ($i_o$) mit der nächsthöheren Pulszahl ($p_o$) sich gegenseitig abwechseln.

5. Vorrichtung (2) zur Durchführung des Verfahrens nach Anspruch 1 mit einem Steuersatz (4) für einen Wechselrichter eines Zwischenkreisumrichters, dem ein Grundschwingungs-Sollwert ($f_1^*$) und ein Spannungs-Sollwert ($u^*$) zugeführt sind, wobei ein Quotientenbildner (6) vorgesehen ist, an dessen x-Eingang der Wert der maximal zulässigen Pulsfrequenz ($f_{pmax}$) und an dessen y-Eingang der Grundfrequenz-Sollwert ($f_1^*$) anstehen, wobei der Quotientenbildner (6) ausgangsseitig mit einem Speicher (8) verknüpft ist, dessen beide Ausgänge mit einer Einrichtung (10) zur Ermittlung des geschalteten Sollwertes der Pulszahl ($p^*$) verbunden sind, und wobei diese Einrichtung (10) außerdem eingangsseitig einerseits mit dem Ausgang des Quotientenbildners (6) und andererseits mit einem Phasenwinkel-Ausgang (12) des Steuersatzes (4) und ausgangsseitig mit einem Pulszahl-Eingang (14) des Steuersatzes (4) verknüpft ist.

6. Vorrichtung (2) nach Anspruch 5, wobei die Einrichtung (10) zur Ermittlung des geschalteten Sollwertes der Pulszahl ($p^*$) eingangsseitig einem Speicher (16) und zwei Differenzbildner (18, 20) und ausgangsseitig einen Umschalter (22) aufweist, wobei den Differenzbildnern (18,20) jeweils eine Konstante (24,26) nachgeschaltet ist, deren Ausgänge einerseits mit einem programmierbaren Zähler (30) und andererseits mit einem weiteren Differenzbildner (28) verknüpft sind, dessen Ausgang mit einem Eingang des programmierbaren Zählers (30) verbunden ist, und wobei der Ausgang des Zählers (30) mit einem Betätigungseingang des Umschalters (22) verknüpft ist, dessen Eingänge jeweils mit einem Ausgang des Speichers (16) und dessen Ausgang mit dem Ausgang der Einrichtung (10) verbunden ist.

7. Vorrichtung (2) nach Anspruch 5, wobei als Einrichtung (10) zur Ermittlung des geschalteten Sollwertes der Pulszahl ($p^*$) ein Mikroprozessor vorgesehen ist, der folgende Gleichungen abarbeitet:

$$i = (p_o - p_u) \cdot B^k$$
$$i_o = (\bar{p} - p_u) \cdot B^k$$
$$i_u = i - i_o$$

mit B = Zahlenbasis.

8. Vorrichtung (2) nach Anspruch 4, wobei als Vorrichtung (2) zur Durchführung des Verfahrens ein Mikroprozessor vorgesehen ist.

## Claims

1. Method of generating a synchronous pulse pattern with fractional pulse numbers ($\bar{p}$) for controlling an inverter of an indirect converter, comprising the following method steps:

a) determining a fractional pulse number ($\bar{p}$) from the maximum permissible pulse frequency ($f_{pmax}$) of

the indirect converter and a fundamental-frequency setpoint value ($f_1$\*),

b) selection of a next-lower and a next-higher integral pulse number ($p_u$, $p_o$) with respect to the found fractional pulse number ($\bar{p}$),

c) provision of two pulse patterns with the selected integral pulse numbers ($p_u$, $p_o$) from the stored pulse patterns,

d) determination of an interval number (i) for each predetermined cycle time (dz) as a function of a difference between the selected next-lower and next-higher pulse number ($p_u$, $p_o$) and a constant,

e) determination of the number of intervals ($i_o$) with the next-higher pulse number ($p_o$) as a function of a difference between the fractional pulse number ($\bar{p}$) and the selected next-lower pulse number ($p_u$) and of a constant,

f) determination of the number of intervals ($i_u$) with the next-lower pulse number ($p_u$) as a function of a difference between the found interval number (i) and the found number of intervals ($i_o$) with the next-higher pulse number ($p_o$),

g) combination of the intervals ($i_u$) of the next-lower pulse number ($p_u$) with the intervals ($i_o$) of the next-higher pulse number ($p_o$) within the cycle time (dz) while the pulse patterns provided are read out.

2. Method according to Claim 1, wherein the interval number (i) of the cycle time (dz), the interval number ($i_o$) with the next-higher pulse number ($p_o$) and the interval number ($i_u$) with the next-lower pulse number ($p_u$) are calculated using the following equations

$$i = (p_o - p_u) \cdot k$$
$$i_o = (\bar{p} - p_u) \cdot k$$
$$i_u = i - i_o$$

3. Method according to Claim 1, wherein the intervals ($i_u$ or $i_o$) are bunched with the same pulse numbers ($p_u$ or $p_o$, respectively).

4. Method according to Claim 1, wherein the intervals ($i_u$) with the next-lower pulse number ($p_u$) and the intervals ($i_o$) with the next-higher pulse number ($p_o$) alternate with one another.

5. Device (2) for carrying out the method according to Claim 1 having a trigger unit (4) for an inverter of an indirect converter to which a fundamental-frequency setpoint value ($f_1$\*) and a voltage set-point value (u\*) are fed, wherein a ratio generator (6) is provided to whose x input the value of the maximum permissible pulse frequency ($f_{pmax}$) is applied and to whose y input the fundamental-frequency set-point value ($f_1$\*) is applied, wherein the output of the ratio generator (6) is connected to a memory (8) whose two outputs are connected to a component (10) for determining the switched set-point value of the pulse number (p\*), and wherein said component (10) is also connected on the input side, on the one hand, to the output of the ratio generator (6) and, on the other hand, to a phase-angle output (12) of the trigger unit (4) and is connected, on the output side, to a pulse-number input (14) of the trigger unit (4).

6. Device (2) according to Claim 5, wherein the component (10) for determining the switched set-point value of the pulse number (p\*) has, on the input side, a memory (16) and two difference generators (18, 20) and, on the output side, a switch (22), wherein there is connected to the output of the difference generators (18, 20) in each case a constant-factor component (24, 26) whose outputs are connected, on the one hand, to a programmable counter (30) and, on the other hand, to a further difference generator (28) whose output is connected to an input of the programmable counter (30), and wherein the output of the counter (30) is connected to an actuating input of the switch (22) whose inputs are each connected to an output of the memory (16) and whose output is connected to the output of the component (10).

7. Device (2) according to Claim 5, wherein a microprocessor is provided as component (10) for determining the switched set-point value of the pulse number (p\*), which microprocessor processes the following equations

$$i = (p_o - p_u) \cdot B^k$$
$$i_o = (\bar{p} - p_u) \cdot B^k$$
$$i_u = i - i_o$$

where B = numerical base.

8. Device (2) according to Claim 4, wherein a microprocessor is provided as device (2) for carrying out the method.

**Revendications**

1. Procédé pour produire un modèle synchrone d'impulsions comportant un nombre fractionnaire d'impulsions $(\bar{p})$ pour la commande d'un onduleur d'un mutateur à circuit intermédiaire, constitué par les étapes opératoires suivantes :

   a) détermination d'un nombre fractionnaire d'impulsions $(\bar{p})$ à partir de la fréquence maximale autorisée d'impulsions $(f_{pmax})$ du mutateur à circuit intermédiaire et d'une valeur de consigne $(f_1^*)$ de la fréquence de base,

   b) sélection d'un nombre entier d'impulsions immédiatement inférieur et d'un nombre entier d'impulsions immédiatement supérieur $(p_u, p_o)$ par rapport au nombre fractionnaire déterminé d'impulsions $(\bar{p})$,

   c) préparation de deux modèles d'impulsions possédant des nombres entiers sélectionnés d'impulsions $(p_u, p_o)$ à partir de modèles mémorisés d'impulsions,

   d) détermination d'un intervalle (i) pour chaque durée prédéterminée (dz) d'un cycle en fonction d'une différence entre le nombre immédiatement inférieur sélectionné d'impulsions et le nombre immédiatement supérieur sélectionné d'impulsions $(p_u, p_o)$ et une constante,

   e) détermination du nombre des intervalles $(i_o)$ au moyen du nombre immédiatement supérieur d'impulsions $(p_o)$ en fonction d'une différence entre le nombre fractionnaire d'impulsions $(\bar{p})$ et le nombre immédiatement inférieur sélectionné d'impulsions $(p_u)$ et d'une constante,

   f) détermination du nombre des intervalles $(i_u)$ avec le nombre immédiatement inférieur d'impulsions $(p_u)$ en fonction d'une différence du nombre déterminé d'intervalles (i) et du nombre déterminé des intervalles $(i_o)$ avec le nombre immédiatement supérieur d'impulsions $(p_o)$,

   g) combinaison des intervalles $(i_u)$ du nombre immédiatement inférieur d'impulsions $(p_u)$ aux intervalles $(i_o)$ du nombre immédiatement supérieur d'impulsions $(p_o)$ à l'intérieur de la durée (dz) du cycle, pendant laquelle les modèles d'impulsions préparés sont lus.

2. Procédé suivant la revendication 1, dans lequel le nombre d'intervalles (i) de la durée (dz) du cycle, le nombre d'intervalles $(i_o)$ avec le nombre immédiatement supérieur d'impulsions $(p_o)$ et le nombre d'intervalles $(i_u)$ avec le nombre immédiatement inférieur d'impulsions $(p_u)$ sont calculés conformément aux relations suivantes

$$i = (p_o - p_u) \cdot k$$
$$i_o = (\bar{p} - p_u) \cdot k$$
$$i_u = i - i_o.$$

3. Procédé suivant la revendication 1, selon lequel les intervalles $(i_u$ ou $i_o)$ sont formés avec les mêmes nombres d'impulsions $(p_u$ ou $p_o)$.

4. Procédé suivant la revendication 1, selon lequel les intervalles $(i_u)$ représentant le nombre immédiatement inférieur d'impulsions $(p_u)$ et les intervalles $(i_o)$ présentant le nombre immédiatement supérieur d'impulsions $(p_o)$ alternent réciproquement.

5. Dispositif (2) pour la mise en oeuvre du procédé selon la revendication 1, comportant un ensemble de commande (4) pour un onduleur d'un mutateur à circuit intermédiaire, auquel sont envoyées une valeur de consigne $(f^*_1)$ de l'oscillation de base et une valeur de consigne de tension $(u^*)$, et dans lequel il est prévu un dispositif de formation de quotient (6), à l'entrée x duquel est envoyée la valeur de la fréquence maximale admissible d'impulsions $(f_{pmax})$ et à l'entrée y duquel est envoyée la valeur de consigne $(f^*_1)$ de la fréquence de base, et dans lequel le dispositif de formation de quotient (6) est relié, côté sortie, à une mémoire (8), dont les deux sorties sont reliées à un dispositif (10) servant à déterminer la valeur de consigne appliquée du nombre d'impulsions $(p^*)$, et dans lequel ce dispositif (10) est relié, en outre, côté entrée, d'une part, à la sortie du dispositif de formation de quotient (6) et, d'autre part, à une sortie de l'angle de phase (12) de l'ensemble de commande (4) et, côté sortie, à une entrée (14) du nombre d'impulsions de l'ensemble de commande (4).

6. Dispositif (2) suivant la revendication 5, dans lequel le dispositif (10) servant à déterminer la valeur de consigne appliquée du nombre d'impulsions $(p^*)$ comporte, côté entrée, une mémoire (16) et deux dispositifs de formation de différences (18,20), et, côté sortie, un commutateur (22), et dans lequel en aval des dispositifs de formation de différences (18, 20) sont branchés respectivement des dispositifs (24,26) délivrant des constantes et dont les sorties sont reliées, d'une part, à un compteur programmable (30) et, d'autre part, à un autre dispositif de formation de différence (28), dont la sortie est reliée à une entrée du compteur programmable (30), et dans lequel la sortie du compteur (30) est reliée à une entrée d'actionnement du commutateur (22), dont les entrées sont reliées respectivement à une sortie de la mémoire (16) et dont la sortie est reliée à la sortie du dispositif (10).

7. Dispositif (2) suivant la revendication 5, dans lequel il est prévu, comme dispositif (10) servant à déterminer la valeur de consigne appliquée du nombre d'impulsions (p*), un microprocesseur qui traite les relations suivantes :

$$i = (p_o - p_u) \cdot B^k$$
$$i_o = (\overline{p} - p_u) \cdot B^k$$
$$i_u = i - i_o$$

avec B = base des nombres.

8. Dispositif (2) suivant la revendication 4, dans lequel un microprocesseur est prévu en tant que dispositif (2) pour la mise en oeuvre du procédé.

FIG 1

FIG 2

FIG 3

FIG 4

FIG 5

FIG 6